# EUROPEAN PATENT SPECIFICATION

(11) **EP 3 529 749 B1**
(45) Date of publication and mention of the grant of the patent: **30.12.2020**
(21) Application number: 18734317.3
(22) Date of filing: 17.05.2018
(51) Int. Cl.: G06K 9/00, G06K 19/06

(54) **GRAPHIC PROTECTIVE ELEMENT AUTHENTICITY CHECK SYSTEM**
AUTHENTIZITÄTSÜBERPRÜFUNGSSYSTEM MIT GRAFISCHEM SCHUTZELEMENT
SYSTÈME DE VÉRIFICATION D'AUTHENTICITÉ D'UN ÉLÉMENT GRAPHIQUE DE PROTECTION

(30) Priority: 29.12.2017 UA 201713163 U; 24.04.2018 UA 201804482
(43) Date of publication of application: 28.08.2019
(73) Proprietor: Cipherme Technology Ltd, London NW3 6NG (GB)
(72) Inventor: The designation of the inventor has not yet been filed
(74) Representative: Lawrence, James
(86) International application number: PCT/UA2018/000047
(87) International publication number: WO 2019/132853

(56) References cited:
- FR-A1- 2 904 130
- US-A1- 2011 142 294
- US-A1- 2012 327 450

## Description

This invention refers to the devices for checking the correctness of marking on the record medium, devices for reading from the record medium, devices for reading and identifying printed or written characters or for identifying images etc. More specifically, the claimed system refers to digital automated electronic system for the protection of the graphic protective element against the unauthorized reproduction of the graphic protective element.

Document US2004079800 (A1) dated 29.04.2004 is known in the art, disclosing the document check system, which allows checking whether the document is original. The terminal receives the recorded information about the vector function pointing to the non-reproducible fraction of differences in the print field of the original document and saves the recorded vector element on hard disk through the Internet. The server receives as a calculated vector of functions the same information as the recorded vector element in the document being checked if the document is original, reads the recorded vector element from the hard disk, compares the received vector of calculated functions with the read recorded vector element and checks whether the document being checked is original on the basis of the comparison result.

Technically, the instant invention works at the micro-level and requires additional special optical devices or technical solutions. Such configuration limits the method usability.

Document TW201711438 dated 16.03.2017 is known in the art, disclosing the copy protection method and forgery prevention method based on the microscopic texture image. The microscopic texture image consists of the plurality of code domains of the same sizes, each code domain consists of several ink dots, and its image resolution is from 300 to 1200 dpi, the minimum distance between two ink dots is 3∼8 pixels, but the size of each ink dot is 1∼4 pixels. The coordinates and specific number of pixels of each ink dot in the form of microscopic shader are calculated through the software algorithm and the image data are created for the printing or printing on the product surface. It means that the image of microscopic texture contains the product code and is difficult for copying. The microscopic texture copy protection under this invention is characterized by the difficulty of the copying process. Using this invention, the identification of products requiring the protection against forgery can be carried out quickly, accurately and reliably. Besides, this invention can generate microscopic image of texture, which is highly secure and has a high number of reports through the regular printing, therefore, the cost of printing significantly decreases whereas the copy prevention effect increases.

This invention stipulates that the pattern should be randomly generated under specific printing and check conditions. The forgery is detected through the comparison of preset parameters with the candidate's image. The tolerances are indicated as the value of dots - 1-4 pixels and 3-8 pixels between each dot and are fixed. Such methodology just complicates the copying but does not protect against it.

Patent application US2017091505 (A1) dated 30.03.2017 is known in the art, disclosing the system, which includes the resolution of the template of 2D bar code, containing several standard 2D elements of bar codes printed on the printed surface, and which is fixed to the unique product; and at least one glyph printed in the area of 2D bar code. At least one glyph is formed from the information identifying the unique product. The elements of 2D standard bar code can be decoded by the first 2D scanner with the bar code for receiving the information about the product, but the second scanning shall be performed by the user to check whether the mark corresponds to relevant glyph shown on the screen. In other embodiment, 2D bar code template, which includes at least one glyph, can be decoded with a second 2D scanner with the bar code for receiving different information about the product. Other examples of prior art include the documents FR2904130 and US2011/142294.

The elements of the bar code are returned to the user in the form of a specific character. The user shall perform the second scanning, for example, using the remote tools of the user to check the compliance of the mark with the glyph shown on the screen. Alternatively, standard elements of the bar codes can be proper, that is to say, original and the method of decoding the elements of the standard bar code may not be subject to public disclosure; it may be done, for example, for ensuring the additional level of protection against forgery.

A well-known system allows for checking the presence of information provided by the 2D bar code on the remote server. As the identification of the 2D bar code and the glyph is carried out according to standardized decoding modes, it allows for unobstructed copying of the graphic protective element provided that the copy is reproduced in a qualitative manner.

This technical solution is pegged as the closest analogue. The common features of the claimed utility model and closest analogue in view of the terminology used in the following description are the input block configured to receive a sequence of characters, which is the result of identification of the first two-dimensional code.

The objective of the instant invention is to create the system allowing for the graphic protective element authenticity check. As seen from the prior art, there is a need to increase the level of protection of the graphic protective element to reduce the likelihood of its forgery, copying, reproduction etc.

Such objective can be achieved based on the fact that the graphic protective element authenticity check system comprises the input block configured to receive a sequence of characters, which is the result of identification of the first two-dimensional code.

In accordance with the technical solution, the input block is further configured to receive the digital image of the second two-dimensional code.

The system includes the electronic database comprising
- the first set of data, which includes the set of unique data for at least a part of sequence of characters which is the result of identification of the first two-dimensional code M1, where the length of each sequence of characters includes the set of unique data,
- the second set of data, which includes the set of keys for the identification of digital image of the second two-dimensional code characterized by at least the presence of control points and/or graphic pattern where each key is associated with at least a part of points of the graphic pattern and sequence of characters, which is the result of identification of the first two-dimensional code from the plurality of M1 and which creates the preset key M2',
- the third set of data, which includes the plurality of unique encoded values, each of which was assigned the relevant digital image of the second two-dimensional code M2,
- the fourth set of data, which includes the predetermined set of reference quality parameters Q, where each set of reference parameters is assigned to the digital image of the second two-dimensional code based on its analysis.

Besides, the system includes the decoder configured to identify the digital image of the second two-dimensional code for receiving the encoded key M2" using the preset key M2' and set of calculated Q' quality parameters, based at least on the determination of the presence of points and/or graphic pattern and sequence of characters of the digital image of the second two-dimensional code.

Besides, the system includes the first logic comparison unit configured for logic comparison of the decoded key M2" with the preset key M2', saved in the second set of data.

The system comprises the second logic comparison unit configured for logic comparison of the set of calculated quality Q' parameters with the set of reference quality parameters Q.

Besides, the system includes the output block configured to receive the results of the logic comparison from the first logic comparison unit and the second logic comparison unit and transfer the results of the graphic protective element authenticity check, based on the results of the logic comparison of the first logic comparison unit and second comparison unit.

In this case, the inputs of the input block are the inputs of the system and the outputs of the input block are connected to the input of the electronic database and input of the decoder,

The outputs of the decoder and electronic database are connected to the inputs of the first logic comparison unit and second logic comparison unit,

The outputs of the first logic comparison unit and second logic comparison unit are connected to the input of the output block and the outputs of the output block are the outputs of the system.

According to another embodiment, the graphic protective element authenticity check system comprises the input block configured to receive a sequence of characters, which is the result of identification of the first two-dimensional code.

According to the claimed technical solution, the input block is further configured to receive the digital image of the second two-dimensional code connected with the first two-dimensional code.

The system includes the electronic database comprising
- the first set of data, which includes the set of unique data for at least a part of sequence of characters, which is the result of identification of the first two-dimensional code M1, where the length of each sequence of characters includes the set of unique data,
- the second set of data, which includes the set of keys for the identification of digital image of the second two-dimensional code characterized by at least the presence of control points and/or graphic pattern where each key is associated with at least a part of points of the graphic pattern and sequence of characters, which is the result of identification of the first two-dimensional code from the plurality of M1 and which creates the preset key M2',
- the third set of data corresponding to the generated and scattered set of points of the graphic pattern, forming another two-dimensional code, and including the plurality of unique encoded values, each of which is assigned a relevant digital image of the second two-dimensional code M2 based on the set of the first two-dimensional code M1,
- the fourth set of data, which includes the predetermined set of reference quality parameters Q, where each set of reference parameters is assigned to the digital image of the second two-dimensional code based on its analysis.

Besides, the system includes the decoder configured to identify the digital image of the second two-dimensional code for receiving the encoded key M2" using the preset key M2' and set of calculated Q' quality parameters, based at least on the determination of the presence of points and/or graphic pattern and sequence of characters of the digital image of the second two-dimensional code.

Besides, the system includes the first logic comparison unit configured for logic comparison of the decoded key M2" with the preset key M2', saved in the second set of data.

The system comprises the second logic comparison unit configured for logic comparison of the set of calculated parameters of Q' quality with the plurality of reference quality parameters Q.

Besides, the system includes the output block configured to receive the results of the logic comparison from the first logic comparison unit and the second logic comparison unit and transfer the results of the graphic protective element authenticity check, based on the results of the logic comparison of the first logic comparison unit and second comparison unit.

Moreover, the inputs of the input block are the inputs of the system and the outputs of the input block are connected to the input of the electronic database and input of the decoder,

The outputs of the decoder and electronic database are connected to the inputs of the first logic comparison unit and second logic comparison unit,

The outputs of the first logic comparison unit and second logic comparison unit are connected to the input of the output block and the outputs of the output block are the outputs of the system.

According to another embodiment, the system includes the third set of data corresponding to the generated and scattered set of points of the graphic pattern, forming another two-dimensional code, and including the plurality of unique encoded values, each of which is assigned a relevant digital image of the second two-dimensional code M2 based on the set of the first two-dimensional code M1.

The technical result being achieved when using the technical solution consists in ensuring the determination of the increased level of protection of the graphic protective element using the comprehensive analysis of the data, which are the result of the identification from the code medium. In this case, the monitoring is carried out with regard to the quality of the printed graphic protective element as an additional level of authenticity check. That is to say, the claimed system provides a high level of authenticity when determining the originality of the graphic protective element. Besides, the claimed system allows for more accurate detection of the forged protective graphic element during the check. The additionally claimed technical solution is simple to use, that extends the scope of its implementation.

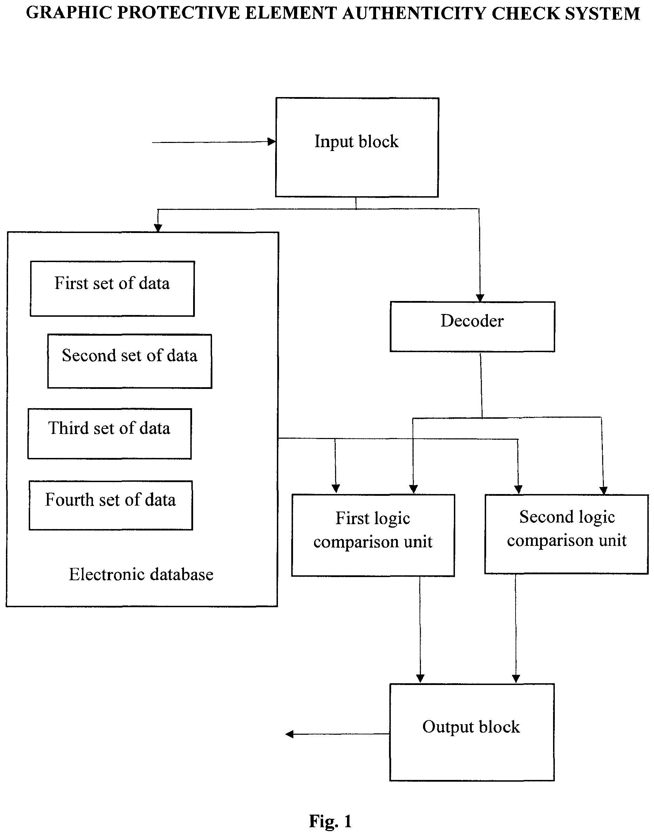

The claimed technical solution uses the principle of physical unclonable function (PUF). The reproducing device converts the data from the digital form to the analogue one. During the conversion, the noises occur, being superimposed on the reproducible data and create unique configuration. Such unique configuration is characterized by the data reproduced in the analogue form and distortions caused by superimposed noises. That is to say, the reproduced data will be somewhat different from the digital type. The said noises are accidental, making impossible their repeated occurrence and reproduction. Even when copying the graphic protective element into the graphic pattern, aside from occurred accidental noises, the noises and distortions are also added by the copy machine. In this regard, the set of reference quality parameters Q of the primary graphic protective element will differ from the set of calculated Q' quality parameters of the copied graphic protective element showing its forgery. The point of the claimed technical solution is explained by the schematic drawing (Fig. 1), which in no way limits the use of the claimed system and their other possible embodiments within the technical solution disclosed in the claims. The said drawing (Fig. 1) explains the point through the conditional material objects with intrinsic features included in the claims.

The following terms will be used in the description for the explanation of the point of the claimed system and its components on the attached drawing and further description.

The graphic protective element authenticity check is the hardware or hardware-software complex, data inputs and outputs configured to receive and transfer the digital data. The system allows for simultaneous processing, conversion, identification, decoding etc. of at least two parameters related to the graphic protective element.

The graphic protective element means the matrix of protected information having high density and complexity, containing binary values, which may include alphanumeric values. In the first embodiment, the graphic protective element has at least two areas encoded under different methods and requiring different decoding algorithms. The function of physical protection is performed through the optimal use of natural and irreversible losses of information occurring during the printing process. The reading of the graphic protective element allows for the determination of its feature (original or copy) and determination of authenticity of the graphic protective element.

The input block is the hardware or hardware-software tool, preferably - multichannel digital receiver. The input block may comprise a separator for the separation of the sequence of characters, which is the result of identification of the first two-dimensional code and digital image of the second two-dimensional code. The subsequent redirection of separate input data ensures their parallel processing.

The electronic database should be understood as the hardware-software solution, preferably produced in the form of the tangible medium characterized by the arrangement of digital data entered, saved, reproduced and deleted via the hardware and software intervention.

The decoder is understood as the hardware-software tool intended for the conversion of data and their provision for further processing.

The logic comparison unit is understood as the hardware or hardware-software tool performing the comparison between the data received at the input pursuant to the preset parameters. The logic comparison unit further performs the evaluation of the result of comparison with the predetermined comparison functions for the establishment of the degree of similarity.

The input block is the hardware or hardware-software tool, in particular, is the digital transmitter.

The following is the example of the invention. As this technical solution may be modified and have alternative embodiments, the following description is set out as an example for the characterization of the essence and possibility of its implementation. It should be obvious that the provided detailed description is not intended for the limitation of its essence to some embodiments but on the contrary, it includes all modifications, equivalents and alternatives falling within the essence and scope of the patent protection set forth in the claims.

The medium comprises the graphic protective element represented in the first embodiment by two encoded readable elements. The first encoded element is represented by two-dimensional code containing public information, which may be available during the code reading. The elements of the standard two-dimensional code can use existing standard and can correspond to any existing format of 2D bar code, such as, for example, Aztec Coding, Datamatrix, PDF417, MaxiCode or QR-coding etc. The colour format of 2D bar code can also be used, for example, high capacity (HCCB) SVC coding format. The second two-dimensional code contains private information, which can be identified under certain conditions. Preferably, the algorithm of decoding a second two-dimensional code differs from the algorithm of decoding the first two-dimensional code. This allows increasing the level of protection of the graphic protective element, and thereby, decreasing both the size of the medium containing the graphic protective element and the length of encoded information requiring lesser load of the system during the processing of the input data. Thus, when reading the graphic protective element, the second two-dimensional code is transmitted to the system as a graphic file, that is to say, digital image of the second two-dimensional code. The result of reading is transmitted to the system for the graphic protective element authenticity check. At the input of the said system the sequence of characters is received being the result of identification of the first two-dimensional code and digital image of the second two-dimensional code.

The input block transmits the received results of reading the graphic protective element to the electronic database and to the decoder. A set of relevant records characterizing the graphic protective element M1, M2, M2 ', and Q is selected from these results of reading.

The electronic database comprises four sets of data. The received results of reading the graphic protective element come to the first set of data. M1 value received in the first set of data is at least a part of read public section of information from the graphic protective element. Based on the determined M1 value, the preset key M2' is determined in the second set of data. The preset key M2' is required for the identification of the digital image of the second two-dimensional code through the decoder. After the identification of the digital image of the second two-dimensional code through the decoder, it will be assigned a decoded M2" key.

The third set of data comprises reference values M2 generated on the basis of the preset M2' key. The reference value M2 and the decoded M2" key identified by the decoder are delivered to the input of the first logic comparison unit.

Based on M1 value, the predefined set of reference quality parameters Q saved in the fourth set of data is determined, which is assigned to the digital image of the second two-dimensional code based on its specific analysis. The example of the analysis of the second two-dimensional code is, in particular, topological analysis.

The decoder identifies the digital image of the second two-dimensional code to receive M2" decoded key and a set of calculated Q' quality parameters. As the choice of algorithm is unknown to third parties, it restricts the access for third parties to the encoded information and makes it impossible to forge the graphic protective element and relevant medium. The set of calculated Q' quality parameters is the indicators of deviation from the reference image used when applying the image, that is the part, which is distinctive, that is to say, with changes incorporated during the reproduction, part of the graphic protective element represented by the second two-dimensional code, on the medium. It allows for the performance of the check of authenticity of the graphic protective element having a high level of protection. The set of reference quality parameters can be represented by a set of indicators. It provides a higher level of protection of the graphic protective element. The set of indicators can comprise, in particular, the data on the number of control points being compared with the number of control points on the readable graphic protective element, or data on the distance between reference points, where this data is compared with analogous distances from the readable graphic protective element, or data on the geometric figure where the quality indicator will be determined by the degree of similarity between the reference form and determined form of the readable graphic element or random combination of the above-mentioned sets etc.

In the course of evaluation of the general quality parameter, a certain definition function is used, which defines, for example, the threshold on exceeding the array of limit values of relative similarity for each set of indicators. As a result of this definition, the forged graphic protective element can be detected by processing at least one parameter, or after processing the entire set of indicators, if the previous definitions, in addition to the latter, did not detect forgery. This allows for more adapted distribution of resources of the claimed system.

Using the first logic comparison unit, the decoded M2" key is correlated and compared with the preset M2' key, saved in the second set of data and through the help of the second logic comparison unit, the set of calculated Q' quality parameters are correlated and compared with the set of reference quality parameters Q. It allows for the performance of simultaneous check of authenticity of the graphic protective element by several parameters.

Using the input block, the summary results are received with regard to the logic comparison from the first logic comparison unit and second logic comparison unit and these results are transferred for the graphic protective element authenticity check based on the results of the first logic comparison unit and second logic comparison unit.

In the second embodiment, the medium comprises the graphic protective element represented by one encoded element. The difference of the second embodiment from the first embodiment will be shown below. In this embodiment, the protective graphic element is not linked to the performance in certain two-dimensional code. Besides, the protective element in this version is embodied as a single image of two-dimensional code. The single image of two-dimensional code should be understood that the digital image of the second two-dimensional code is linked to the first two-dimensional code, as shown below. Such embodiment allows for the production of the graphic protective element in any form, for example, in the form of certain geometric figure, abstract figure etc. In this case, M1 is contained directly on the graphic protective element. That is to say, the encoding algorithm directly applies to the graphic protective element. The encoding algorithm can be random but it does not refer to the quality assessment algorithm to determine the predefined set of reference quality parameters Q. Preferably, after reading the graphic protective element, the certain relevant area will be defined where the public information M1 is saved.

The unique sequences of binary data for the pattern of a certain graphic protective element are formed according to the algorithm involving the placement of points in several layers. During the generation, each layer is responsible for different functions, for instance, positioning, identification, verification. The generation algorithm provides for the generation of binary data such that the combination of binary data could determine the authenticity through the identification and verification of certain layers, which, in such interpretation, correspond to the encoded data M2 with the use of the preset key M2'. Therefore, the placement of the first two-dimensional code is possible as a single (essentially - integrated, complex) two-dimensional code.

In this case, the electronic database includes the third set of data corresponding to the generated and scattered set of points of the graphic pattern, creating a second two-dimensional code, and comprising the set of unique encoded values, each of which is assigned a relevant digital image of the second two-dimensional code M2 based on the set of the first two-dimensional code M1.

The important difference from the first embodiment is the formation of the graphic protective element produced in the form of a single two-dimensional code, where the graphic protective element is produced in any form (round, square, rhomb etc.), wherein the two-dimensional code concurrently represents the encoded public information M1 and encoded data M2.

When identifying the two-dimensional code, the code selection is preferably applied for the identification. That is, based on the appearance of the two-dimensional code it is not possible to identify clearly the decoding algorithm for the detection of public information. This allows for not limiting to a certain embodiment of the graphic protective element and the algorithm of decoding public information.

The claimed system can be combined with external electronic complexes for different purposes depending on the aim of the utilization. For example, this system allows for marking the products with unique graphic protective elements, ensures control and monitoring of the sales of such products, in particular, through original graphic protective elements. The detection of non-original protective elements shows their non-uniqueness, thereby pointing to the probable attempt of counterfeiting or counterfeiting of products, or marking the product with forged graphic protective elements. It extends the functionality of the claimed system. Besides, this system can be produced as fixed or mobile, expanding the opportunities for its use in various fields of activity.

## Claims

1. A graphic protective element authenticity check system comprising an input block configured to receive a sequence of characters, which is the result of identification of a first two-dimensional code, wherein
the input block is further configured to receive the digital image of a second two-dimensional code,
where the system includes:
an electronic database comprising
- a first set of data, which includes a set of unique data for at least a part of sequence of characters, which is the result of identification of the first two-dimensional code M1, where the length of each sequence of characters includes the set of unique data,
- a second set of data, which includes a set of keys for the identification of digital image of the second two-dimensional code **characterized by** at least the presence of control points and/or graphic pattern where each key is associated with at least a part of points of the graphic pattern and sequence of characters, which is the result of identification of the first two-dimensional code from the plurality of M1 and which creates the preset key M2',
- a third set of data, which includes a plurality of unique encoded values, each of which was assigned the relevant digital image of the second two-dimensional code M2,
- a fourth set of data which includes the predetermined set of reference quality parameters Q, where each set of reference parameters is assigned to the digital image of the second two-dimensional code based on its analysis;
a decoder configured to identify the digital image of the second two-dimensional code for receiving the encoded key M2" using the preset key M2' and set of calculated Q' quality parameters, based at least on the determination of the presence of points and/or graphic pattern and sequence of characters of the digital image of the second two-dimensional code;
a first logic comparison unit configured for logic comparison of the decoded key M2" with the preset key M2', saved in the second set of data;
a second logic comparison configured for logic comparison of the set of calculated quality Q' parameters with the set of reference parameters of Q quality;
an output block configured to receive the results of logic comparison from the first logic comparison unit and second logic comparison unit and transfer the results of the graphic protective element authenticity check based on the results of logic comparison of the first logic comparison unit and second logic comparison unit;
where the inputs of the input block are the inputs of the system and the outputs of the input block are connected to the input of the electronic database and input of the decoder,
the outputs of the decoder and electronic database are connected to the input of the first logic comparison unit and second logic comparison unit,
the outputs of the first logic comparison unit and second logic comparison unit are connected to the input of the output block and the outputs of the output block are the outputs of the system.

2. A graphic protective element authenticity check system comprising an input block configured to receive a sequence of characters which is the result of identification of a first two-dimensional code, wherein
the input block is further configured to receive the digital image of a second two-dimensional code connected with the first two-dimensional code,
where the system includes:
an electronic database comprising
- a first set of data, which includes a set of unique data for at least a part of sequence of characters, which is the result of identification of the first two-dimensional code M1, where the length of each sequence of characters includes a set of unique data,
- a second set of data, which includes the set of keys for the identification of digital image of the second two-dimensional code **characterized by** at least the presence of control points and/or graphic pattern where each key is associated with at least a part of points of the graphic pattern and sequence of characters, which is the result of identification of the first two-dimensional code from the plurality of M1 and which creates the preset key M2',
- a third set of data corresponding to a generated and scattered set of points of the graphic pattern, forming another two-dimensional code, and including a plurality of unique encoded values, each of which is assigned a relevant digital image of the second two-dimensional code M2 based on the set of the first two-dimensional code M1,
- a fourth set of data which includes the predetermined set of reference quality parameters Q, where each reference parameter is assigned to the digital image of the second two-dimensional code based on its analysis;
a decoder configured to identify the digital image of the second two-dimensional code for receiving the encoded key M2" using the preset key M2' and set of calculated Q' quality parameters, based at least on the determination of the presence of points and/or graphic pattern and sequence of characters of the digital image of the second two-dimensional code;
a first logic comparison unit configured for logic comparison of the preset key M2" with the decoded key M2", saved in the second set of data; a second logic comparison unit configured for logic comparison of the set of calculated quality Q' parameters with the set of reference quality parameters Q;
an output block configured to receive the results of the logic comparison from the first logic comparison unit and the second logic comparison unit and transfer the results of the graphic protective element authenticity check, based on the results of the logic comparison of the first logic comparison unit and second comparison unit;
where the inputs of the input block are the inputs of the system and the outputs of the input block are connected to the input of the electronic database and input of the decoder,
the outputs of the decoder and electronic database are connected to the inputs of the first logic comparison unit and second logic comparison unit,
the outputs of the first logic comparison unit and second logic comparison unit are connected to the input of the output block and the outputs of the output block are the outputs of the system.

## Patentansprüche

1. Ein grafischen schützend Element Authentizität Prüfen System, das einen Eingabeblock umfasst, konfiguriert zum eine Folge von Zeichen empfangen, die das Ergebnis der Identifizierung eines ersten zweidimensionalen Codes ist;
**worin**
der Eingabeblock ist ferner so konfiguriert, dass er das digitale Bild eines zweiten zweidimensionalen Codes empfängt.
wo das System enthält:
eine elektronische Datenbank umfasst
- einen ersten Satz von Daten, der einen Satz eindeutiger Daten für mindestens einen Teil der Folge von Zeichen enthält, der das Ergebnis der Identifizierung des ersten zweidimensionalen Codes M1 ist, wobei die Länge jeder Folge von Zeichen den Satz von enthält eindeutige Daten,
- einen zweiten Satz von Daten, der einen Satz Schlüssel für die Identifizierung von eines digitalen Bildes des zweiten zweidimensionalen Codes enthält, der durch mindestens das Vorhandensein von Kontrollpunkten und / oder grafisches Muster gekennzeichnet ist, wobei jeder Schlüssel mindestens einem Teil von zugeordnet ist Punkte des grafischen Musters und Folge von Zeichen, welches das Ergebnis der Identifizierung des ersten zweidimensionalen Codes aus der Vielzahl von M1 ist, und das den voreingestellten Schlüssel M2' schafft,
- einen dritten Satz von Daten, der mehrere eindeutige codierte Werte enthält, denen jeweils das relevante digitale Bild des zweiten zweidimensionalen Codes M2 zugewiesen wurde;
- einen vierten Satz von Daten, der den vorbestimmten Satz von Referenzqualitätsparametern Q enthält, wobei jeder Satz von Referenzparametern dem digitalen Bild des zweiten zweidimensionalen Codes basierend auf seiner Analyse zugordnet ist;
einen Decodierer, der konfiguriert ist, um das digitale Bild des zweiten zweidimensionalen Codes zum empfangen des codierten Schlüssels M2" unter Verwendung des voreingestellten Schlüssels M2' und eines Satzes berechneter Q'-Qualitätsparametern zu identifizieren, basierend zumindest auf der Bestimmung des Vorhandenseins von Punkten und / oder grafischen Musters und Folge von Zeichen des digitalen Bildes des zweiten zweidimensionalen Codes;
eine erste Logikvergleichseinheit, die für den Logikvergleich des decodierten Schlüssels M2" mit dem voreingestellten Schlüssel M2' konfiguriert ist und im zweiten Satz von Daten gespeichert ist;
einen zweiten Logikvergleich, der für den Logikvergleich des Satzes berechneter Qualitäts-Q'-parameter mit dem Satz von Referenzparametern der Q-Qualität konfiguriert ist;
einen Ausgangsblock, der konfiguriert ist, um die Ergebnisse des Logikvergleichs von der ersten Logikvergleichseinheit und der zweiten Logikvergleichseinheit zu empfangen und die Ergebnisse der grafischen schützend Element Authentizität Prüfen basierend auf den Ergebnissen des Logikvergleichs der ersten Logikvergleichseinheit und des zweiten Logikvergleichs zu übertragen Einheit;
wobei die Eingänge des Eingabeblocks die Eingänge des Systems sind und die Ausgänge der Eingabeblocks mit dem Eingang der elektronischen Datenbank und dem Eingang des Decoders verbunden sind;
die Ausgänge des Decoders und der elektronischen Datenbank sind mit den Eingang des ersten Logikvergleichseinheit und der zweiten Logikvergleichseinheit verbunden.
die Ausgänge des ersten Logikvergleichseinheit und der zweiten Logikvergleichseinheit sind mit dem Eingang des Ausgangsblocks verbunden, und die Ausgänge des Ausgangsblocks sind die Ausgänge des Systems.

2. Ein grafischen schützend Element Authentizität Prüfen System, das einen Eingabeblock umfasst, der konfiguriert ist, um eine Folge von Zeichen zu empfangen, die das Ergebnis der Identifizierung eines zweidimensionalen Codes ist;
**worin**
der Eingabeblock ist ferner konfiguriert, um das digitale Bild eines zweiten zweidimensionalen Codes zu empfangen, der mit dem ersten zweidimensionalen Code verbunden ist,
wo das System enthält
eine elektronische Datenbank, die enthält
- einen ersten Satz von Daten, der einen Satz eindeutiger Daten für mindestens einen Teil der Folge von Zeichen enthält, der das Ergebnis der Identifizierung des ersten zweidimensionalen Codes M1 ist, wobei die Länge jeder Folge von Zeichen den Satz von enthält eindeutige Daten;
- einen zweiten Satz von Daten, der den Satz Schlüssel für die Identifizierung eines digitalen Bildes des zweiten zweidimensionalen Codes enthält, der durch mindestens das Vorhandensein von Kontrollpunkten und / oder grafisches Muster gekennzeichnet ist, wobei jeder Schlüssel mindestens einem Teil von zugeordnet ist Punkte des grafischen Musters und der Folge von Zeichen, welches das Ergebnis der Identifizierung des ersten zweidimensionalen Codes aus der Vielzahl von M1 ist, und das den voreingestellten Schlüssel M2' schafft,
- ein dritter Satz von Daten, der einem erzeugten und gestreuten Satz von Punkten des grafischen Musters entspricht, einen anderen zweidimensionalen Code bildet und eine Vielzahl von einzigartiger codierter Werter einschließlich, von denen ist zu jeder einem relevanten digitales Bild des zweiten zweidimensionalen Codes M2 zugeordnet, basierend auf dem Satz des ersten zweidimensionalen Code Ml;
- einen vierten Satz von Daten, der den vorbestimmte Satz von Referenzqualitätsparametern Q enthält, wobei jeder Referenzqualitätsparameter dem digitalen Bild des zweiten zweidimensionalen Codes basierend auf seiner Analyse zugordnet ist;
einen Decodierer, der konfiguriert ist, um das digitale Bild des zweiten zweidimensionalen Codes zum empfangen des codierten Schlüssel M2" unter Verwendung des voreingestellten Schlüssels M2' und eines Satzes berechneter Q'-Qualitätsparametern zu identifizieren, basierend zumindest auf der Bestimmung des Vorhandenseins von Punkten und / oder grafischen Musters und einer Folge von Zeichen des digitaler Bildes des zweiten zweidimensionalen Codes;
der erste Logikvergleichseinheit, die für den Logikvergleich des voreingestellten Schlüssel M2" mit dem decodierten Schlüssel M2' konfiguriert ist und im zweiten Satz von Daten gespeichert ist;
einen zweiten Logikvergleich, der für den Logikvergleich des Satzes berechneter von berechneten Qualitäts-Q'-parametern mit dem Satz von Referenz-Qualitäts-Parametern Q konfiguriert ist;
einen Ausgangsblock, der konfiguriert ist, um die Ergebnisse des Logikvergleichs von der ersten Logikvergleichseinheit und der zweiten Logikvergleichseinheit zu empfangen und die Ergebnisse der grafischen schützend Element Authentizität Prüfen basierend auf den Ergebnissen des Logikvergleichs der ersten Logikvergleichseinheit und des zweiten Vergleichs zu übertragen Einheit;
wobei die Eingänge des Eingabeblocks die Eingänge des Systems sind und die Ausgänge der Eingabeblocks mit dem Eingang der elektronischen Datenbank und dem Eingang des Decoders verbunden sind;
die Eingänge des Decoders und der elektronischen Datenbank sind mit den Eingängen des ersten Logikvergleichseinheit und des zweiten Logikvergleichseinheit verbunden.
die Ausgänge des ersten Logikvergleichseinheit und des zweiten Logikvergleichseinheit sind mit dem Eingang des Ausgangsblocks verbunden, und die Ausgänge der Ausgangsblocks sind die Ausgänge des Systems.

## Revendications

1. Un système de validation d'authenticité de l'élément de protection graphique comprenant un bloc d'entrée configuré pour obtenir la séquence de caractères, qui est le résultat d'identification d'un premier code bidimensionnel,
**dans lequel**
le bloc d'entrée est en outre configuré pour recevoir l'image numérique d'un second code bidimensionnel,
où le système comprend :
une base de données électronique contenant
- un premier ensemble de données, qui inclut un ensemble de données uniques pour au moins une partie de la séquence de caractères, qui est le résultat de l'identification du premier code bidimensionnel M1, où la longueur de chaque séquence de caractères inclut l'ensemble de données uniques ;
- un second ensemble de données, qui inclut un ensemble de clés pour l'identification d'image numérique du second code bidimensionnel **caractérisé par** au moins la présence des points de contrôle et / ou du motif graphique où chaque clé est associée au moins une partie de points du motif graphique et à la séquence de caractères qui est le résultat de l'identification du premier code bidimensionnel de l'ensemble de M1 et qui créé la clé prédéfinie M2',
- un troisième ensemble de données, qui inclut une pluralité de valeurs codées uniques, dont chacune a été affectée à l'image numérique pertinente du second code bidimensionnel M2;
- un quatrième ensemble de données qui inclut l'ensemble prédéterminé de paramètres de qualité de référence Q, où chaque paramètre de référence est attribué à l'image numérique du second code bidimensionnel sur la base de son analyse ;
un décodeur configuré pour identifier l'image numérique du second code bidimensionnel pour recevoir la clé codée M2" à l'aide de la clé prédéfinie M2' et d'un ensemble de paramètres de qualité calculés Q', sur la base au moins de la détermination de la présence de points et / ou motif graphique et séquence de caractères de l'image numérique du second code bidimensionnel ;
une première unité logique de comparaison configurée pour une comparaison logique de la clé décodée M2" avec une clé prédéfinie M2', sauvegardée dans le second ensemble de données ;
une second comparaison logique configurée pour une comparaison logique de l'ensemble de paramètres de qualité calculée Q' avec l'ensemble de paramètres de référence de qualité Q ;
un bloc de sortie configuré pour recevoir les résultats de la comparaison logique de la première unité de comparaison logique et de la seconde unité de comparaison logique et transférer les résultats du contrôle d"authenticité de l'élément de protection graphique sur la base des résultats de la comparaison logique de la première unité de comparaison logique et de la seconde unité de comparaison logique ;
où les entrées du bloc d'entrée sont les entrées du système et les sorties du bloc d'entrée sont connectées à l'entrée de la base de données électronique et à l'entrée du décodeur ;
les sorties du décodeur et de la base de données électronique sont connectées à l'entrée de la première unité de comparaison logique et de la seconde unité de comparaison logique ;
les sorties de la première unité de comparaison logique et de la seconde unité de comparaison logique sont connectées à l'entrée du bloc de sortie et les sorties du bloc de sortie sont les sorties du système.

2. Système de vérifications d'authenticité d'élément de protection graphique comprenant un bloc d'entrée configuré pour recevoir une séquence de caractères qui est le résultat de l'identification d'un premier code bidimensionnel,
**dans lequel**
le bloc d'entrée est en outre configuré pour recevoir l'image numérique d'un second code bidimensionnel connecté au premier code bidimensionnel,
où le système inclut :
une base de données électronique comprenant
- un premier ensemble de données, qui comprend un ensemble de données uniques au moins une partie de la séquence de caractères, qui est le résultat de l'identification du premier code bidimensionnel M1, où la longueur de chaque séquence de caractères comprend un ensemble de données uniques ;
- un second ensemble de données, qui inclut un ensemble de clés pour l'identification d'image numérique du second code bidimensionnel **caractérisée par** au moins la présence des points de contrôle et / ou du motif graphique où chaque clé est associée au moins à la partie des points du motif graphique et à la séquence de caractères, qui est le résultat de l'identification du premier code bidimensionnel de l'ensemble M1 et qui créé la clé prédéfinie M2' ;
- un troisième ensemble de données correspondant à un ensemble de points généré et dispersé du motif graphique, formant un autre code bidimensionnel, et comprenant une pluralité de valeurs codées uniques, dont chacune se voit attribuer une image numérique pertinente du second code bidimensionnel M2 basé sur l'ensemble du premier code bidimensionnel M1 ;
- un quatrième ensemble de données qui inclut l'ensemble prédéterminé de paramètres de qualité de référence Q, où chaque paramètre de référence est assigné à l'image numérique du second code bidimensionnel basé sur son analyse ;
un décodeur configuré pour identifier l'image numérique du second code bidimensionnel pour recevoir la clé décodée M2" à l'aide de la clé prédéfinie M2' et d'un ensemble de paramètres de qualité calculés Q', sur la base au moins sur la détermination de la présence des points et / ou motif graphique et séquence de caractères de l'image numérique du second code bidimensionnel ;
une première unité logique de comparaison configurée pour une comparaison logique de la clé prédéfinie M2" avec une clé décodée M2', mémorisée dans le second ensemble de données ;
une seconde comparaison logique configurée pour une comparaison logique de l'ensemble des paramètres de qualité calculés Q' avec l'ensemble de paramètres de référence de qualité Q ;
un bloc de sortie configuré pour recevoir les résultats de la comparaison logique de la première unité de comparaison logique et de la seconde unité de comparaison logique et transférer les résultats du contrôle d'authentificité de l'élément de protection graphique sur la base des résultats de la comparaison logique de la première unité de comparaison logique et de la seconde unité de comparaison logique ;
où les entrées du bloc d'entrée sont les entrées du système et les sorties du bloc d'entrée sont connectées à l'entrée de la base de données électronique et à l'entrée du décodeur ;
les sorties du décodeur et de la base de données électronique sont connectées à l'entrée de la première unité de comparaison logique et de la second unité de comparaison logique ;
les sorties de la première unité de comparaison logique et de la seconde unité de comparaison logique sont connectées à l'entrée du bloc de sortie, les sorties du bloc de sortie sont les sorties du système.
